# EUROPÄISCHE PATENTSCHRIFT

(11) **EP 0 979 182 B1**
(45) Veröffentlichungstag und Bekanntmachung des Hinweises auf die Patenterteilung: **15.09.2004**
(21) Anmeldenummer: 98925446.1
(22) Anmeldetag: 29.04.1998
(51) Int. Cl.: B60R 21/00

(54) **AIRBAGSYSTEM FÜR KRAFTFAHRZEUGE**
AUTOMOBILE AIRBAG SYSTEM
SYSTEME D'AIRBAG POUR VEHICULES AUTOMOBILES

(30) Priorität: 02.05.1997 DE 19720149
(43) Veröffentlichungstag der Anmeldung: 16.02.2000
(73) Patentinhaber: Takata-Petri AG, 63743 Aschaffenburg (DE)
(72) Erfinder: ADOMEIT, Heinz-Dieter, D-10623 Berlin (DE); OSE, Falk, D-13189 Berlin (DE)
(74) Vertreter: Bärmann, Klaus, Dipl.-Ing.
(86) Internationale Anmeldenummer: PCT/DE1998/001250
(87) Internationale Veröffentlichungsnummer: WO 1998/050257

(56) Entgegenhaltungen:
- WO-A-97/25237
- DE-C- 4 430 588

## Beschreibung

Die Erfindung betrifft ein Airbagsystem für Kraftfahrzeuge nach dem Oberbegriff des Anspruchs 1.

Gassack-Systeme, bei denen bei einem Unfall des Kraftfahrzeuges mit Hilfe eines Gasgenerators automatisch ein Kissen vor dem Insassen aufgeblasen wird, sind sowohl für den Fahrersitz als auch für den Beifahrersitz bekannt.

Damit ein sicherer Schutz des Insassen bei einem Aufprall des Kraftfahrzeuges gewährleistet ist, muß das Kissen in kurzer Zeit aufgeblasen werden. Praktisch erfolgt das Aufblasen innerhalb weniger Millisekunden. Damit wird gewährleistet, daß das Kissen bei einem Aufprall des Fahrzeuges bereits aufgeblasen ist, bevor der Insasse in Richtung des Kissens geschleudert wird. Dabei wird vorausgesetzt, das sich der Insasse in einer normalen, durch die Sitze vorgegebenen Position befindet, so daß der Insasse das Kissen während des Aufblasens noch nicht berührt.

Dieser Normalfall liegt aber dann nicht vor, wenn sich der Insasse während des Aufpralls des Kraftfahrzeuges nach vorn gebeugt hat, und sich in der Regel mit dem Kopf innerhalb des für den aufblasbaren Gassack vorgesehenen Raumes befindet. Dann schlagen der in der o.g. kurzen Zeit aufgeblasene Gassack sowie eventuell Teile der Abdeckkappe gegen den Insassen, wodurch es zu Verletzungen kommen kann.

Zur Vermeidung dieses Nachteils ist es aus der DE 42 27 559 A1 bekannt, den Gassack in Richtung des Insassen (Axialrichtung) mit vergleichsweise langsamer und in Seitwärtsrichtung mit vergleichsweise großer Expansionsgeschwindigkeit aufzublasen. Diese Vorrichtung weist aber den Nachteil auf, daß der Gassack in axialer Richtung noch nicht voll aufgeblasen sein kann, wenn der Insasse beim Aufprall nach vorn geschleudert wird, so daß er dadurch verletzt wird.

Weiterhin ist aus dem US-Patent 5,383,682 bekannt, das Airbagsystem auf einem plastisch verformbaren Träger anzuordnen. Dieser Träger ist durch eine Kraft, die nach Entfaltung des Airbags durch den Insassen auf diesen aufgebracht wird, verformbar. Auch mit dieser Anordnung kann nicht verhindert werden, daß der Insasse von dem sich entfaltenden Gassack angeschossen und dabei verletzt wird.

Aus dem US-Patent 4,200,309 ist noch ein Lenkrad bekannt, bei dem innerhalb des Lenkradkranzes ein kastenförmiges Element vorhanden ist, das unter dem Einfluß des aufprallenden Kopfes eines Insassen verformbar ist. Dadurch soll die Verletzungsgefahr verringert werden. Der Nachteil dieses Lenkrades besteht darin, daß es nur bei geringen Fahrzeugverzögerungen wirksam sein kann, daß aber bei großen Verzögerungen, wie sie im Crashfall auftreten, eine Verletzung nur unwesentlich verringert wird. Ein Airbag zum Schutz des Insassen im Crashfall ist bei diesem Lenkrad nicht vorgesehen.

Aus der DE 44 30 588 ist ein Airbagsystem für ein Kraftfahrzeug mit einem Gassack und mindestens einem zugeordneten Gasgenerator bekannt, das mindestens zum Teil vom Fahrzeuginsassen wegbewegbar an dem Kraftfahrzeug befestigt ist. Dazu ist es verschiebbar, drehbar oder kippbar befestigt. Durch dieses Airbagsystem kann zwar die Verletzungsgefahr für einen nach vorn gebeugten Insassen verringert werden. Ein Schutz des Insassen bei geringen Verzögerungen, die den Airbag nicht auslösen, wird jedoch nicht erreicht.

Der Erfindung liegt die Aufgabe zugrunde, ohne Verringerung der Expansionsgeschwindigkeit des Gassackes in axialer Richtung die Verletzungsgefahr für den Insassen in nach vorn gebeugter Position zu beseitigen oder zu vermindern und auch bei geringen Verzögerungen, bei denen sich der Gassack nicht entfaltet, die Verletzungsgefahr zu verringern.

Erfindungsgemäß wird das gemäß den Merkmalen des Anspruchs 1 erreicht.

Bei einem Airbagsystem für Kraftfahrzeuge mit mindestens einem Gassack und mindestens einem zugeordneteten Gasgenerator, wobei das Airbagsystem zumindestens teilweise vom Insassen wegbewegbar ist, ist erfindungsgemäß der vom Insassen wegbewegbare Abschnitt des Airbagsystems an mindestens einem Deformationselement oder verschiebbaren Element befestigt, das bei großer Fahrzeugverzögerung und Zündung des Gasgenerators durch Mittel, die diesem Deformationselement bzw. verschiebbaren Element zugeordnet sind, so beeinflußbar ist, daß es durch die aus dem Gasgenerator austretenden Gase mit geringerem Kraftaufwand verformbar bzw. wegbewegbar ist, als bei geringer Fahrzeugverzögerung und Nichtzündung des Gasgenerators durch Einwirkung des aufprallenden Insassen.

Bei diesem Airbagsystem wird also im Crashfall das Deformationselement oder das verschiebbare Element durch ein zusätzliches Mittel so beeinflußt, daß es im Crashfall leicht deformiert bzw. vom Insassen weg verschiebbar ist, d.h. daß ein niedriger Kraftaufwand erforderlich ist. Der Impuls, der durch die aus dem Gasgenerator austretenden Gase erzeugt wird, ist deshalb in der Lage, das Airbagsystem vor der Entfaltung des Gassackes schnell vom Insassen weg zu bewegen. Dadurch wird für den Fall, daß sich der Insasse in einer nach vorn gebeugter Stellung befindet, ein Freiraum für die Gassackentfaltung geschaffen. Andererseits wird bei geringeren Verzögerungen das Deformationselement oder das verschiebbare Element nicht beeinfußt, so daß es mit größerem Kraftaufwand deformierbar bzw. verschiebbar ist. Bei einem Aufprall des Insassen erfolgt deshalb eine langsamere Deformation bzw Verschiebung, wobei ein Teil der Aufprallenergie zeitlich gestreckt absorbiert wird. Damit wird der auf das Airbagsystem aufprallende Insasse auch bei geringeren Verzögerungen, bei denen der Airbag noch nicht auslöst, über den Verschiebeweg des Airbagsystems abgebremst, so daß die Gefahr der Verletzung für den Insassen verringert wird.

Diese erfindungsgemäße Anordnung kann sowohl vorgesehen sein, wenn das gesamte Airbagsystem vom Insassen wegbewegbar ist als auch dann, wenn nur der Gasgenerator vom Insassen wegbewegbar ist.

In einer ersten Ausführungsform ist vorgesehen, daß mindestens ein am Airbagsystem mit seinem einen Ende schwenkbar gelagertes Deformationselement vorgesehen ist, das mit seinem anderen Ende an einem im Crashfall von diesem entfernbaren Widerlager anliegt. Bei dieser Ausführungsform wird die Wirkung des Deformationselementes im Crashfall dadurch zumindest teilweise aufgehoben, daß das am Widerlager anliegende Ende nach dessen Entfernung geschwenkt wird.

Das Airbagsystem kann deshalb durch die aus dem Gasgenerator austretenden Gase leicht vom Insassen weggeschoben werden.

In einer weiteren Ausgestaltung dieser Ausführungsform ist vorgesehen, daß das Widerlager durch eine Feder in Arbeitsstellung gehalten ist und im Crashfall durch eine von der Fahrzeugverzögerung ausgelöste Vorrichtung entgegen der Federkraft vom Deformationselement wegbewegbar ist. Als Vorrichtung für das Wegbewegen des Widerlagers kann die erste Stufe eines zweistufigen Gasgenerators, eine Hebelmechanik oder eine zusätzliche Treibladung vorgesehen sein, wobei die beiden letztgenannten vor der Entfaltung des Gassacks ausgelöst werden. Diese Vorrichtung zusammen mit dem wegbewegbaren Widerlager sind die oben genannten zusätzlichen Mittel zur Beeinflussung des Deformationselementes.

Am schwenkbar befestigten Ende des Deformationselementes kann ein Scharnier oder eine Stelle geringerer Materialstärke als Drehpunkt vorgesehen sein. Durch die Materialschwächung wird wie mittels des Scharniers das Schwenken ermöglicht.

In einer anderen Ausgestaltung ist das Deformationselement an seinem schwenkbar befestigten Ende kreissegmentförmig gebogen und in einem Gegenstück mit einer entsprechenden kreissegmentförmigen Wölbung geführt. Damit ist eine Führung ähnlich einem Kugelgelenk vorhanden.

In einer zweiten Ausführungsform ist vorgesehen, daß der verschiebbare Abschnitt des Airbagsystems an mindestens einem Dämpfungselement befestigt ist, das mit einem Dämpfungsmedium zusammenwirkt, wobei das Dämpfungsmedium im Crashfall entfernbar ist. In diesem Fall wird bei geringer Fahrzeugverzögerung durch das Komprimieren oder teilweise Entfernen des Dämpfungsmittels die gleiche Energie absorbierende Wirkung wie bei der ersten Ausführungsform erzielt. Im Crashfall wird die Dämpfungswirkung durch Entfernen des Dämpfungsmittels vollständig aufgehoben, so daß das Airbagsystem unter dem Einfluß des aus dem Gasgenerator austretenden Gases schnell vom Insassen wegbewegt wird.

Als Dämpfungselement ist vorzugsweise ein Gasdruckdämpfer vorgesehen, der eine Dämpfungskammer und einen darin beweglichen Kolben aufweist, mit dem der verschiebbare Abschnitt des Airbagsystems verbunden ist und die Dämpfungskammer weist eine im Crashfall vor der Entfaltung des Gassacks zu öffnende Entlastungsöffnung auf. Als Vorrichtung für das Öffnen der Entlastungsöffnung kann wieder die erste Stufe eines zweistufigen Gasgenerators, eine Hebelmechanik oder eine zusätzliche Treibladung vorgesehen sein.

Es ist zweckmäßig, daß zwei Dämpfungselemente symmetrisch zur Längsachse des Airbagsystems angeordnet sind.

In einer dritten Ausführungsform ist vorgesehen, daß das Airbagsystem an mindestens einem vom Insassen weg bewegbaren Führungselement befestigt ist, dem mindestens eine Klemmeinheit zugeordnet ist, wobei die Klemmkraft so bemessen ist, daß das Führungselement unter dem Druck des bei Nichtzündung des Gasgenerators auf das Airbagsystem aufprallenden Insassen von diesem wegbewegbar ist und daß die Klemmeinheit im Crashfall vor Zündung des Gasgenerators vom Führungselement entfernbar ist.

Bei dieser Ausführungsform wird bei geringer Fahrzeugverzögerung durch die Klemmkraft am bewegbaren Führungselement die gleiche Wirkung wie bei den vorher genannten Ausführungsformen erreicht. Im Crashfall wird die Klemmeinheit vom Führungselement entfernt, so daß das Airbagsystem unter dem Einfluß des aus dem Gasgenerator austretenden Gases schnell vom Insassen wegbewegt wird. Als Vorrichtung für das Wegbewegen der Klemmeinheit kann wieder die erste Stufe eines zweistufigen Gasgenerators, eine Hebelmechanik oder eine zusätzliche Treibladung vorgesehen sein.

Es ist zweckmäßig, daß ein zentrales Führungselement vorgesehen ist, dem zwei gegenüberliegende, radial auf das Führungselement wirkende Klemmeinheiten zugeordnet sind. In einer bevorzugten Ausgestaltung ist vorgesehen, daß jede Klemmeinheit einen durch eine Feder an das Führungselement andrückbaren Kolben aufweist, und daß auf der der Feder entgegengesetzten Seite des Kolbens eine Ringkammer vorgesehen ist, die über mindestens einen Kanal mit dem Ort der zusätzlichen Treibladung verbunden ist. Zwischen dem Kolben und dem Führungselement ist zweckmäßig ein Reibbelag vorgesehen. Durch Auswahl der Federstärke und des Reibbelages läßt sch die Klemmkraft in weiten Grenzen verändern.

Die Erfindung soll anhand von Zeichnungen erläutert werden.
Es zeigen:
- Fig. 1: ein Airbagsystem für die Fahrerseite mit schwenkbaren Deformationselementen in der Ruhelage;
- Fig. 2: das Airbagsystem nach Fig. 1 in der unteren Endlage nach einem Fahrzeugcrash;
- Fig. 3: das Airbagsystem nach Fig. 1 in der unteren Endlage nach Krafteinleitung durch den Insassen;
- Fig. 4a-4c: unterschiedliche Ausbildungen des Drehpunktes der Deformationselemente;
- Fig. 5: ein Airbagsystem für die Fahrerseite mit Dämpfungselementen in der Ruhelage;
- Fig. 6: ein Airbagsystem für die Fahrerseite mit einem durch eine Klemmeinheit beeinflußbaren Führungselement.

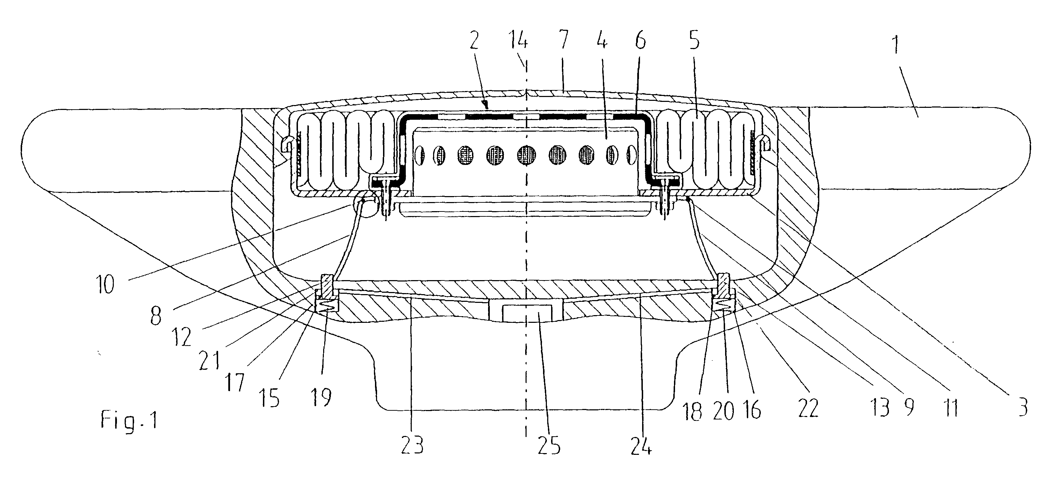

Bei der Ausführungsform der Fig. 1 ist in einem Lenkrad 1 ein Airbagsystem 2 vorgesehen. Dieses besteht aus einem Generatorträger 3 mit daran befestigtem Gasgenerator 4 und weiterhin aus einem gefaltetem Gassack 5, wobei zwischen den beiden letztgenannten ein Diffusor 6 vorgesehen ist. Das Airbagsystem ist unter einer Abdeckkappe 7 im Lenkrad geschützt angeordnet.

An der Unterseite des Airbagsystems sind zwei Deformationselemente 8, 9 befestigt, die an ihren oberen Enden in Drehpunkten 10, 11 schwenkbar sind. Die Deformationselemente bestehen aus Flachmaterial und erstrecken sich von den Drehpunkten aus schräg nach unten. Den unteren Enden der Deformationselemente sind Widerlager 12, 13 zugeordnet, die in Richtung der Lenkradachse 14 bewegbar sind. In der dargestellten Ruhelage liegen die unteren Enden innen an den Widerlagern an. Die Widerlager 12, 13 erstrecken sich ausgehend von Kammern 15, 16 nach oben. In den Kammern weisen sie Kolben 17, 18 auf, die mit Federn 19, 20 zusammenwirken. Auf der anderen Seite der Kolben sind Ringkammern 21, 22 vorgesehen, die über Kanäle 23, 24 mit einer Kammer verbunden sind, in der sich eine Zusatztreibladung 25 befindet. Zwischen der oberen Begrenzung der Ringkammern 21, 22 und den Kolben sind nicht dargestellte punktuelle Stützstellen vorgesehen, durch die die Höhe der Ringkammern bestimmt ist.

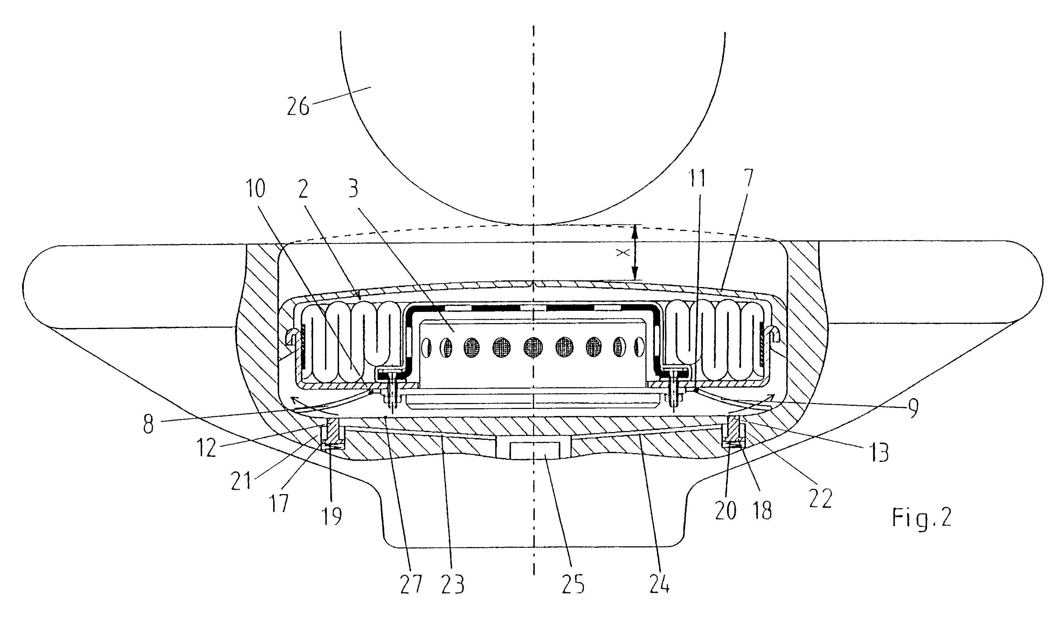

Im Crashfall (Fig. 2) wird die Zusatztreibladung 25 mit Hilfe nicht dargestellter Sensoren zeitversetzt vor dem Gasgenerator 4 gezündet. Das dabei austretende Gas tritt durch die Kanäle 23, 24 in die Ringkammern 21, 22 ein und drückt auf die Kolben 17, 18. Dadurch werden die Widerlager 12, 13 entgegen der Kraft der Federn 19, 20 nach unten bewegt, so daß die unteren Enden der Deformationselemente 8, 9 nunmehr frei liegen. Nach Zündung des Gasgenerators 4 kann dann durch den Impuls der aus diesem austretenden Gase das Airbagsystem 2 einschließlich der Abdeckkappe 7 unter geringem Kraftaufwand um den Betrag X vom Insassen 26 weg bewegt werden. Da sich die Deformationselemente 8, 9 nicht mehr an den Widerlagern abstützen können, gleiten sie am Boden 27 des Raumes für das Airbagsystem ab und drehen sich dabei um die Drehpunkte 10, 11 nach außen. Die Drehpunkte sind so ausgebildet, daß sie dieser Bewegung einen geringen Widerstand entgegensetzen.

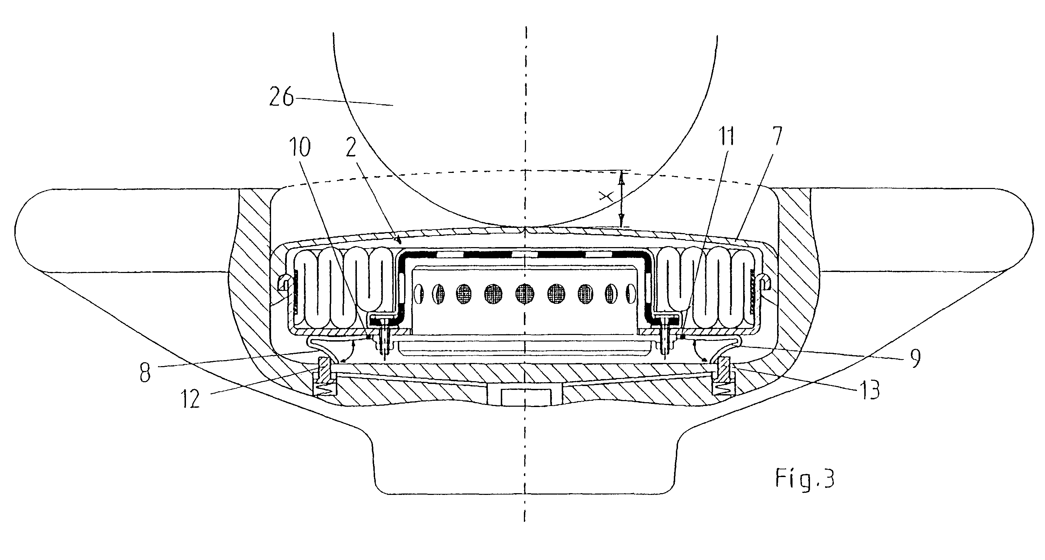

Für den Fall, daß die Fahrzeugverzögerung so gering ist, daß der Gasgenerator und die Zusatztreibladung nicht gezündet werden (Fig. 3), verharren die Widerlager 12, 13 in ihrer Ruhelage, so daß die unteren Enden der Deformationselemente 8, 9 abgestützt werden. Durch den auf das Airbagsystem 2 auftreffenden Insassen 26 wird eine Kraft in die Deformationselemente 8, 9 eingeleitet und da diese sich an den Widerlagern abstützen können, werden sie sowohl um die Drehpunkte 10, 11 gedreht als auch abgeknickt, so daß sie dann die in der Fig. 3 dargestellte Form aufweisen. Damit wird zugleich das Airbagsystem 2 einschließlich der Abdeckkappe 7 um den Betrag X vom Insassen wegbewegt. Der Knickbereich ist so ausgelegt, daß der Insasse mit einer für ihn weitestgehend verträglichen Kraft während der Verschiebung des Airbagmoduls um den Betrag X abgebremst wird.

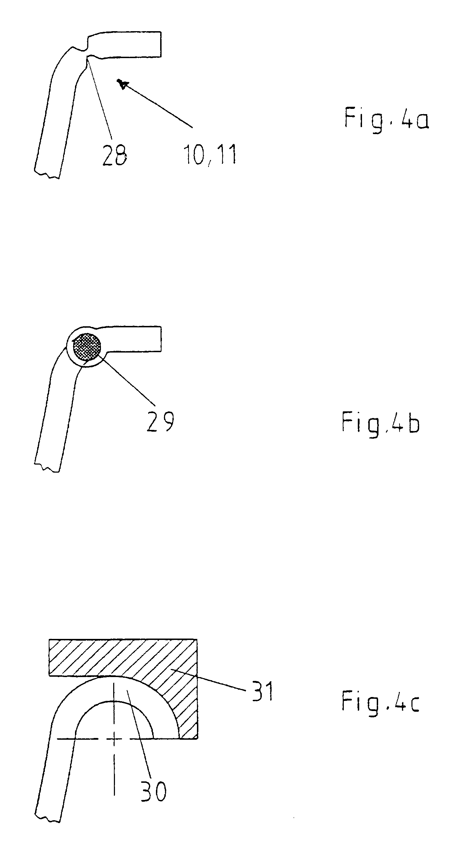

In den Figuren 4 a bis 4c sind Ausführungsformen der Deformationselemente in den Drehpunkten 10, 11 dargestellt. In der Ausführungsform der Fig. 4a wird das Drehen durch eine Stelle 28 mit geringerer Materialstärke ermöglicht. Die Drehung der Deformationselemente erfolgt durch deren Biegung in diesem Bereich. Bei der Ausführungsform der Fig. 4b ist im Drehpunkt ein Scharnier 29 vorgesehen, so daß die Drehung eine reine Klappbewegung darstellt. Bei der Ausführungsform der Fig. 4c weisen die Deformationselemente im Bereich des Drehpunktes ein Ende 30 auf, das in Form eines Kreissegmentes gebogen ist, dem in einem Gegenstück 31 eine entsprechende konkave Wölbung zugeordnet ist. In dieser Wölbung kann sich das Deformationselement ähnlich wie ein Kugelelement drehen.

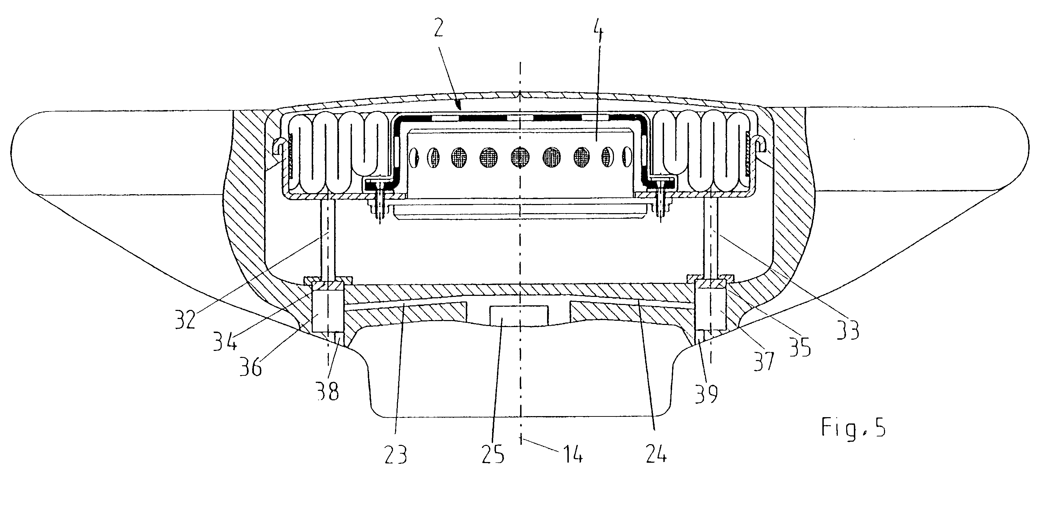

In der Ausführungsform der Fig. 5 ist das Airbagsystem 2 auf Dämpfungselementen 32, 33 angeordnet, die in Richtung der Lenkradachse 14 verschiebbar sind. Die Dämpfungselemente weisen je einen Kolben 34, 35 auf, wobei jeder Kolben in einer Dämpfungskammer 36, 37 geführt ist. Durch die in diesen enthaltene Luft wird im Zusammenwirken mit den Kolben 34, 35 das Airbagsystem in der dargestellten Ruhelage gehalten. Die Dämpfungskammern enthalten Entlastungsöffnungen 38, 39, die in der Ruhelage verschlossen sind. Weiterhin sind die Dämpfungskammern über Kanäle 23, 24 an eine Kammer mit einer Zusatztreibladung 25 angeschlossen.

Für die Gewährleistung der Ruhelage der Kolben 34, 35 sind auch die Eintrittsöffnungen der Kanäle 23, 24 in die Dämpfungskammern verschlossen.

Im Crashfall wird die Zusatztreibladung 25 über an sich bekannte und nicht dargestellte Sensoren zeitversetzt vor dem Gasgenerator 4 gezündet. Der Druckimpuls der Zusatztreibladung führt zu einem plötzlichen Druckanstieg in den Kanälen 23, 24, so daß zunächst deren Öffnungen zu den Dämpfungskammern 36, 37 freigegeben werden. Anschließend steigt der Druck in den Dämpfungskammern 36, 37, der so bemessen ist, daß die Entlastungsöffnungen 38, 39 freigegeben werden. Dadurch baut sich der Druck in den Dämpfungskammern 36, 37 schlagartig ab und der nachfolgende Impuls der aus dem Gasgenerator austretenden Gase kann das Airbagsystem gegen einen geringen Widerstand vom Insassen weg bewegen.

Im Fall einer geringen Fahrzeugverzögerung, bei der weder die Zusatztreibladung 25 noch der Gasgenerator gezündet werden, bleiben die Entlastungsöffnungen 38, 39 sowie die Eintrittsöffnungen der Kanäle 23, 24 in die Dämpfungskammern 36, 37 verschlossen. Der auf das Airbagsystem auftreffende Insasse wird über die Verschiebung des Airbagsystems gedämpft abgebremst, indem die in den Dämpfungskammern 36, 37 vorhandene Luft durch die Kolben 34, 35 komprimiert wird.

Die Verschiebung des Airbagmoduls 2 im Crashfall und im Fall geringer Fahrzeugverzögerung ist nicht dargestellt, da sie der in den Figuren 2 und 3 dargestellten Verschiebung entspricht.

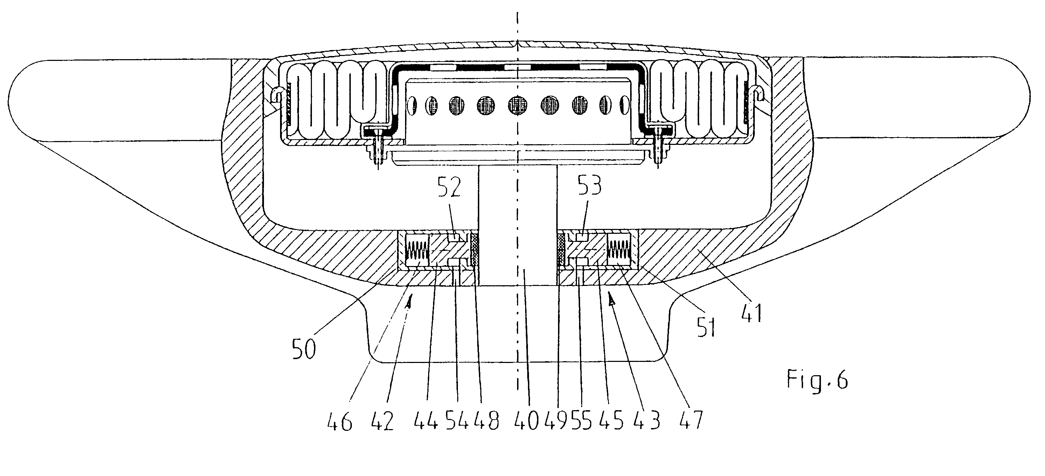

In der Ausführungsform der Fig. 6 ist das Airbagsystem auf einem Führungselement 40 befestigt, das in der Lenkradnabe 41 geführt ist. Das Führungselement ist in der Ruhelage durch zwei radial angeordnete Klemmeinheiten 42, 43 fixiert. Die Klemmeinheiten 42, 43 weisen Kolben 44 bzw. 45 auf, die in einer Kammer 46 bzw. 47 geführt sind. Die Klemmelemente weisen an ihrer dem Führungselement 40 zugewandten Seite einen Reibbelag 48 bzw. 49 auf und werden durch Federn 50 bzw. 51, die gegen die Kolben 44, 45 drükken, mit einer durch die gewählte Federkonstante bestimmten Kraft gegen das Führungselement 40 gedrückt. Auf der anderen Seite der Kolben 44, 45 sind Ringkammern 52, 53 vorhanden, die über Kanäle 54, 55 mit einer nicht dargestellten Kammer mit einer Zusatztreibladung verbunden sind.

Im Crashfall wird die Zusatztreibladung wie bei den vorher beschriebenen Ausführungsformen wieder zeitversetzt vor dem Gasgenerator gezündet. Die austretenden Gase treiben die Kolben 44, 45 radial nach außen, so daß die Reibbeläge 48, 49 vom Führungselement 40 weg bewegt werden. Die Klemmung des Führungselementes 40 ist damit aufgehoben. Der nachfolgende Impuls der aus dem Gasgenerator austretenden Gase kann das Airbagsystem frei nach unten bewegen.

Bei geringer Fahrzeugverzögerung werden die Reibbeläge 48, 49 über die Kolben 44, 45 durch die Kraft der Federn 50, 51 wie in der Ruhelage an das Führungselement 40 gepreßt. Der auf das Airbagsystem auftreffende Insasse wird durch die sich daraus ergebenden Reibkräfte über den Verschiebeweg des Airbagsystems abgebremst, wobei die erforderliche Kraft für die Verschiebung des Airbagsystems größer ist als im Crashfall.

Auch bei dieser Ausführungsform ist die Verschiebung des Airbagmoduls 2 im Crashfall und im Fall geringer Fahrzeugverzögerung nicht dargestellt, da sie der in den Figuren 2 und 3 dargestellten Verschiebung entspricht.

## Patentansprüche

1. Airbagsystem für Kraftfahrzeuge mit mindestens einem Gassack und mindestens einem zugeordneteten Gasgenerator, wobei das Airbagsystem zumindestens teilweise vom Insassen wegbewegbar ist, wobei der vom Insassen wegbewegbare Abschnitt des Airbagsystems an mindestens einem Deformationselement oder verschiebbaren Element befestigt ist,
**dadurch gekennzeichnet,**
**daß** das Deformationselement (8, 9) oder das verschiebbare Element (32, 33, 40) bei großer Fahrzeugverzögerung und Zündung des Gasgenerators (4) durch Mittel, die diesem Deformationselement bzw. verschiebbaren Element zugeordnet sind, so beeinflußbar ist, daß es durch die aus dem Gasgenerator (4) austretenden Gase mit geringerem Kraftaufwand verformbar bzw. wegbewegbar ist, als bei geringer Fahrzeugverzögerung und Nichtzündung des Gasgenerators (4) durch Einwirkung des aufprallenden Insassen (26).

2. Airbagsystem nach Anspruch 1, **dadurch gekennzeichnet, daß** das gesamte Airbagsystem (2) vom Insassen (26) wegbewegbar ist.

3. Airbagsystem nach Anspruch 1, **dadurch gekennzeichnet, daß** der Gasgenerator (4) vom Insassen wegbewegbar ist.

4. Airbagsgsystem nach mindestens einem der Ansprüche 1 bis 3, **dadurch gekennzeichnet, daß** mindestens ein am Airbagsystem (2) mit seinem einen Ende schwenkbar gelagertes Deformationselement (8, 9) vorgesehen ist, das mit seinem anderen Ende an einem im Crashfall von diesem entfernbaren Widerlager (12, 13) anliegt.

5. Airbagsystem nach Anspruch 4, **dadurch gekennzeichnet, daß** das Widerlager (12, 13) durch eine Feder (19, 20) in Arbeitsstellung gehalten ist und im Crashfall durch eine von der Fahrzeugverzögerung ausgelöste Vorrichtung (25) entgegen der Federkraft vom Deformationselement (8, 9) wegbewegbar ist.

6. Airbagsystem nach Anspruch 5, **dadurch gekennzeichnet, daß** als Vorrichtung für das Wegbewegen des Widerlagers die erste Stufe eines zweistufigen Gasgenerators, eine Hebelmechanik oder eine zusätzliche Treibladung (25) vorgesehen ist.

7. Airbagsystem nach mindestens einem der Ansprüche 4 bis 6, **dadurch gekennzeichnet, daß** am schwenkbar befestigten Ende des Deformationselementes (8, 9) ein Scharnier (29) oder eine Stelle (28) geringerer Materialstärke als Drehpunkt (10, 11) vorgesehen sind.

8. Airbagsystem nach mindestens einem der Ansprüche 4 bis 6, **dadurch gekennzeichnet, daß** das Deformationselement an seinem schwenkbar befestigten Ende (30) kreissegmentförmig gebogen ist und in einem Gegenstück (31) mit einer entsprechenden kreissegmentförmigen Wölbung geführt ist.

9. Airbagsystem nach mindestens einem der Ansprüche 1 bis 3, **dadurch gekennzeichnet, daß** der verschiebbare Abschnitt des Airbagsystems (2) an mindestens einem Dämpfungselement (32, 33) befestigt ist, das mit einem Dämpfungsmedium zusammenwirkt, wobei das Dämpfungsmedium im Crashfall entfernbar ist.

10. Airbagsystem nach Anspruch 9, **dadurch gekennzeichnet, daß** als Dämpfungselement (32, 33) ein Gasdruckdämpfer vorgesehen ist, der eine Dämpfungskammer (36, 37) und einen darin beweglichen Kolben (34, 35) aufweist, mit dem der verschiebbare Abschnitt des Airbagsystems (2) verbunden ist und daß die Dämpfungskammer (36, 37) eine im Crashfall vor der Entfaltung des Gassacks (5) zu öffnende Entlastungsöffnung (38, 39) aufweist.

11. Airbagsystem nach Anspruch 10, **dadurch gekennzeichnet, daß** als Vorrichtung für das Öffnen der Entlastungsöffnung die erste Stufe eines zweistufigen Gasgenerators, eine Hebelmechanik oder eine zusätzliche Treibladung (25) vorgesehen ist.

12. Airbagsystem nach mindestens einem der Ansprüche 9 bis 11, **dadurch gekennzeichnet, daß** zwei Dämpfungselemente (32, 33) symmetrisch zur Längsachse des Airbagsystems (2) angeordnet sind.

13. Airbagsystem nach mindestens einem der Ansprüche 1 bis 3, **dadurch gekennzeichnet, daß** der bewegbare Abschnitt des Airbagsystems (2) an mindestens einem vom Insassen weg bewegbaren Führungselement (40) befestigt ist, dem mindestens eine Klemmeinheit (42, 43) zugeordnet ist, wobei die Klemmkraft so bemessen ist, daß das Führungselement (40) unter dem Druck des bei Nichtzündung des Gasgenerators (4) auf das Airbagsystem aufprallenden Insassen von diesem wegbewegbar ist und daß die Klemmeinheit (42, 43) im Crashfall vor Zündung des Gasgenerators (4) vom Führungselement (40) entfernbar ist.

14. Airbagsystem nach Anspruch 13, **dadurch gekennzeichnet, daß** als Vorrichtung für das Wegbewegen der Klemmeinheit die erste Stufe eines zweistufigen Gasgenerators, eine Hebelmechanik oder eine zusätzliche Treibladung (25) vorgesehen ist.

15. Airbagsystem nach Anspruch 13 oder 14, **dadurch gekennzeichnet, daß** ein zentrales Führungselement (40) vorgesehen ist, dem zwei gegenüberliegende, radial auf das Führungselement wirkende Klemmeinheiten (42, 43) zugeordnet sind.

16. Airbagsystem nach Anspruch 13 bis 15, **dadurch gekennzeichnet, daß** jede Klemmeinheit (42, 43) einen durch eine Feder (50, 51) an das Führungselement (40) andrückbaren Kolben (44, 45) aufweist, und daß auf der der Feder (50, 51) entgegengesetzten Seite des Kolbens (44, 45) eine Ringkammer (52, 53) vorgesehen ist, die über mindestens einen Kanal (54, 55) mit dem Ort der zusätzlichen Treibladung verbunden ist.

17. Airbagsystem nach Anspruch 16, **dadurch gekennzeichnet, daß** zwischen dem Kolben (44, 45) und dem Führungselement (40) ein Reibbelag (48, 49) vorgesehen ist.

## Claims

1. Airbag system for motor vehicles with at least one gas bag and at least one associated gas generator, wherein the airbag system can be moved away from the occupant at least in part, wherein the section of the airbag system which can be moved away from the occupant is fixed on at least one deformation element or displaceable element
**characterised in that**
the deformation element (8, 9) or displaceable element (32, 33, 40) in the case of substantial vehicle deceleration and ignition of the gas generator (4) can be influenced by means which are allocated to this deformation element or displaceable element so that it can be deformed or moved away through the gases emitted from the gas generator (4) with a lower amount of force than in the case of reduced vehicle declaration and non-ignition of the gas generator (4) through the impact of the occupant (26).

2. Airbag system according to claim 1 **characterised in that** the complete airbag system (2) can be moved away from the occupant (26).

3. Airbag system according to claim 1 **characterised in that** the gas generator (4) can be moved away from the occupant.

4. Airbag system according to at least one of claims 1 to 3 **characterised in that** at least one deformation element (8, 9) is provided which is mounted for swivel movement on the airbag system (2) by one end and adjoins by its other end an abutment (12, 13) which can be removed from the deformation element in the event of a crash.

5. Airbag system according to claim 4 **characterised in that** the abutment (12, 13) is held in the working position by a spring (19, 20) and in the event of a crash can be moved away from the deformation element (8, 9) against spring force through a device (25) released by the deceleration of the vehicle.

6. Airbag system according to claim 5 **characterised in that** as a device for moving away the abutment is provided the first stage of a two-stage gas generator, a lever mechanism or an additional propelling charge (25).

7. Airbag system according to at least one of claims 4 to 6 **characterised in that** a hinge (29) or an area (28) of reduced material thickness is provided as the turning point (10, 11) at the swivel-mounted end of the deformation element (8, 9).

8. Airbag system according to at least one of claims 4 to 6 **characterised in that** the deformation element is bent in the shape of a circle segment at its swivel-mounted end (30) and is guided in a counter member (31) having a corresponding circle-segment shaped curvature.

9. Airbag system according to at least one of claims 1 to 3 **characterised in that** the displaceable section of the airbag system (2) is fixed on at least one damping element (32,33) which interacts with a damping medium wherein the damping medium can be removed in the event of a crash.

10. Airbag system according to claim 9 **characterised in that** as damping element (32, 33) is provided a gas pressure damper which has a damping chamber (36, 37) and a piston (34, 35) movable therein to which the displaceable section of the airbag system (2) is connected and that the damping chamber (36, 37) has a relaxation opening (38, 39) which in the event of a crash is to be opened prior to the unfolding of the gas bag (5).

11. Airbag system according to claim 10 **characterised in that** as a device for opening the relaxation opening is provided the first stage of a two-stage gas generator, a lever mechanism or an additional propelling charge (25).

12. Airbag system according to at least one of claims 9 to 11 **characterised in that** two damping elements (32, 33) are arranged symmetric relative to the longitudinal axis of the airbag system (2).

13. Airbag system according to at least one of claims 1 to 3 **characterised in that** the movable section of the airbag system (2) is fixed on at least one guide element (40) which can be moved away from the occupant and is associated with at least one clamping unit (42, 43) wherein the clamping force is measured so that the guide element (40) under the pressure of the occupant striking the airbag system in the event of non-ignition of the gas generator (4) can be moved away from the occupant and that in the event of a crash the clamping unit (42, 43) can be removed from the guide element (40) prior to ignition of the gas generator (4).

14. Airbag system according to claim 13 **characterised in that** as a device for moving away the clamping unit is provided the first stage of a two-stage gas generator, a lever mechanism or an additional propelling charge (25).

15. Airbag system according to claim 13 or 14 **characterised in that** a central guide element (40) is provided which is associated with two opposing clamping units (42, 43) acting radially on the guide element.

16. Airbag system according to claims 13 to 15 **characterised in that** each clamping unit (42, 43) has a piston (44, 45) which can be pressed by a spring (50,51) against the guide element (40) and that on the side of the piston (44, 45) opposite the spring (50, 51) a ring chamber (52, 53) is provided which is connected through at least one duct (54, 55) to the site of the additional propelling charge.

17. Airbag system according to claim 16 **characterised in that** a friction lining (48, 49) is provided between the piston (44, 45) and the guide element (40).

## Revendications

1. Système d'airbag pour véhicules à moteur comportant au moins un coussin gonflable et au moins un générateur de gaz affecté, le système d'airbag pouvant être déplacé, du moins en partie par le passager, la portion du système d'airbag pouvant être déplacée par le passager étant fixée sur au moins un élément de déformation ou un élément mobile,
**caractérisé en ce que**,
l'élément de déformation (8, 9) ou l'élément mobile (32, 33, 40), en cas de ralentissement important du véhicule et d'allumage du générateur de gaz (4), peut être influencé par des moyens qui sont affectés à cet élément de déformation respectivement cet élément mobile, de manière à ce qu'il puisse être déformé respectivement déplacé par les gaz sortant du générateur de gaz (4) avec une dépense d'énergie plus faible qu'en cas de ralentissement faible du véhicule et de non-allumage du générateur de gaz (4) du fait de l'action l'impact exercé par le passager (26).

2. Système d'airbag selon la revendication 1, **caractérisé en ce que** la totalité du système d'airbag (2) peut être déplacée par le passager (26).

3. Système d'airbag selon la revendication 1, **caractérisé en ce que** le générateur de gaz (4) peut être déplacé par le passager.

4. Système d'airbag selon au moins l'une quelconque des revendications 1 à 3, **caractérisé en ce qu'**il est prévu au moins un élément de déformation (8, 9) logé de manière pivotante sur le système d'airbag (2) avec l'une de ses extrémités, élément de déformation qui plaque, avec son autre extrémité, contre un contrefort (12, 13) pouvant être retiré de celle-ci en cas de collision.

5. Système d'airbag selon la revendication 4, **caractérisé en ce que** le contrefort (12, 13) est maintenu en position de travail par un ressort (19, 20) et peut être déplacé, en cas de collision, contre l'élasticité de l'élément de déformation (8, 9), par un dispositif (25) déclenché par le ralentissement du véhicule.

6. Système d'airbag selon la revendication 5, **caractérisé en ce que** le premier étage d'un générateur de gaz à deux étages, un mécanisme à levier ou une charge propulsive (25) supplémentaire est prévu(e) en tant que dispositif de déplacement du contrefort.

7. Système d'airbag selon au moins l'une quelconque des revendications 4 à 6, **caractérisé en ce qu'**il est prévu une charnière (29) ou un point (28) d'épaisseur moindre en tant que point de rotation (10, 11) à l'extrémité de l'élément de déformation (8, 9) fixée de manière à pivoter.

8. Système d'airbag selon au moins l'une quelconque des revendications 4 à 6, **caractérisé en ce que** l'élément de déformation est recourbé en arc de cercle sur son extrémité (30) fixée de manière à pivoter et guidé dans une contre-pièce (31) ayant une courbure en forme d'arc de cercle correspondante.

9. Système d'airbag selon au moins l'une quelconque des revendications 1 à 3, **caractérisé en ce que** la portion mobile du système d'airbag (2) est fixée sur au moins un élément d'amortissement (32, 33) qui interagit avec un fluide d'amortissement, le fluide d'amortissement pouvant être retiré en cas de collision.

10. Système d'airbag selon la revendication 9, **caractérisé en ce qu'**il est prévu comme élément d'amortissement (32, 33) un amortisseur à gaz comprimé (36, 37) et un piston (34, 35) mobile à l'intérieur, auquel la portion mobile du système d'airbag (2) est reliée et **en ce que** la chambre d'amortissement (36, 37) présente une ouverture de décharge (38, 39) à ouvrir en cas de collision avant le déploiement du coussin gonflable (5).

11. Système d'airbag selon la revendication 10, **caractérisé en ce que** le premier étage d'un générateur de gaz à deux étages, un mécanisme de levier ou une charge propulsive (25) supplémentaire est prévu(e) en tant que dispositif d'ouverture de l'ouverture de décharge.

12. Système d'airbag selon au moins l'une quelconque des revendications 9 à 11, **caractérisé en ce que** deux éléments d'amortissement (32, 33) sont disposés symétriquement à l'axe longitudinal de système d'airbag (2).

13. Système d'airbag selon au moins l'une quelconque des revendications 1 à 3, **caractérisé en ce que** la section déplaçable du système d'airbag (2) est fixée sur au moins un élément de guidage (40) pouvant être déplacé par le passager, auquel est affectée au moins une unité de serrage (42, 43), la force de serrage étant dimensionnée de telle façon que l'élément de guidage (40) puisse être déplacé par le passager sous la pression de celui-ci lorsqu'il heurte le système d'airbag en cas de non-allumage du générateur de gaz (4).

14. Système d'airbag selon la revendication 13, **caractérisé en ce que** le premier étage d'un générateur de gaz à deux étages, un mécanisme à levier ou une charge propulsive (25) supplémentaire est prévu(e) en tant que dispositif de déplacement de l'unité de serrage.

15. Système d'airbag selon la revendication 13 ou 14, **caractérisé en ce qu'**un élément de guidage central (40) est prévu auquel sont affectées deux unités de serrage (42, 43) opposées agissant radialement sur l'élément de guidage.

16. Système d'airbag selon les revendications 13 à 15, **caractérisé en ce que** chaque unité de serrage (42, 43) présente un piston (44, 45) pouvant être pressé contre l'élément de guidage 40 par un ressort (50, 51) et **en ce que**, sur le côté du piston (44, 45) opposé au ressort (50, 51), il est prévu une chambre toroïdale (52, 53) qui est reliée au lieu de la charge propulsive supplémentaire par l'intermédiaire d'au moins un canal (54, 55).

17. Système d'airbag selon la revendication 16, **caractérisé en ce qu'**une garniture de friction (48, 49) est prévue entre le piston (44, 45) et l'élément de guidage (40).
